# EUROPÄISCHE PATENTSCHRIFT

(11) **EP 3 023 004 B1**
(45) Veröffentlichungstag und Bekanntmachung des Hinweises auf die Patenterteilung: **02.08.2017**
(21) Anmeldenummer: 15187603.4
(22) Anmeldetag: 30.09.2015
(51) Int. Cl.: A01F 25/20, G05D 1/02, A01K 5/00

(54) **FUTTERMISCHWAGEN UND VERFAHREN ZUR STEUERUNG EINES FUTTERMISCHWAGENS**
FEED MIXING CARRIAGE AND METHOD FOR CONTROLLING A FEED MIXING CARRIAGE
WAGON A MELANGER LE FOURRAGE ET PROCEDE DE COMMANDE D'UN WAGON A MELANGER LE FOURRAGE

(30) Priorität: 18.11.2014 DE 102014116882
(43) Veröffentlichungstag der Anmeldung: 25.05.2016
(73) Patentinhaber: B. Strautmann & Söhne GmbH u. Co. KG, 49196 Bad Laer (DE)
(72) Erfinder: Strautmann, Wolfgang, 49196 Bad Laer (DE); Marquering, Johannes, 49176 Hilter (DE); Trabhardt, Andreas, 49080 Osnabrück (DE)
(74) Vertreter: Träger, Denis

(56) Entgegenhaltungen:
- WO-A1-2008/118004
- DE-B3-102012 107 508
- Anonymous: "Fahrerloses Transportfahrzeug - Wikipedia", , 16. Oktober 2014 (2014-10-16), XP055241849, Gefunden im Internet: URL:https://de.wikipedia.org/w/index.php?t itle=Fahrerloses_Transportfahrzeug&oldid=1 34952234#Navigation_mittels_Umgebungsmerkm alen [gefunden am 2016-01-15]

## Beschreibung

Die Erfindung betrifft ein Verfahren zur Steuerung eines Futtermischwagens mit den Merkmalen des Anspruchs 1. Weiterhin betrifft die Erfindung einen Futtermischwagen zur Ausführung des Verfahrens sowie einen Futtermischwagen mit den Merkmalen des Anspruchs 12. Bei dem Futtermischwagen handelt es vorzugsweise um einen unbemannten, selbstfahrenden Futtermischwagen. Der Futtermischwagen umfasst im Wesentlichen:
- ein autonom verfahr- und steuerbares Fahrgestell,
- Arbeitsorgane in Gestalt von einem Antriebsmotor, einem Fahrantrieb, einem Mischbehälter, einer Ausbringvorrichtung für Futtermittel, einer Wiegeeinrichtung für die aufzunehmende Futtermenge und einem Lenksystem für das Fahrgestell,
- mindestens einen Scanner und/oder Sensor zur Datenermittlung,
- mindestens einen mit den Scannern und/oder Sensoren zusammenwirkenden Rechner.

Automatische Verfahren zur Fütterung von größeren Viehbeständen sind für unterschiedliche Viehgattungen, wie beispielsweise Schweine und Geflügel seit Jahrzehnten bekannt. Auch im Bereich der Rindviehhaltung sind automatisierte Fütterungsverfahren bekannt, bei denen alle Arbeitsgänge von der Futterentnahme aus Vorratslagern über die Erstellung einer vordefinierten Futtermischung bis zur Ablage des Futters in einem Futtergang autonom durchgeführt werden.

Für die Fahrzeugnavigation, also das Fahren des Futtermischwagens zu Vorratslager, Fütterungsstelle, etc., kommen zur Spurführung beispielsweise folgende Techniken in Betracht:
- induktiv: die Fahrspur wird durch eine oder mehrere wechselstromdurchflossene Drahtschleife(n) im oder auf dem Boden vorgegeben und mittels Antenne(n) am Fahrzeug erkannt,
- optisch: Kameras oder ähnliche Sensorik, beispielsweise Laser-Sensorik, die am Fahrzeug installiert ist, erfassen Umgebungsdaten die zur Steuerung des Fahrzeug herangezogen werden,
- virtuell: über ein Positionsbestimmungssystem, z.B. GPS, wird das Fahrzeug entlang einer virtuellen Leitlinie geführt.
Teilweise werden die beschriebenen Spurführungstechniken auch miteinander kombiniert, beispielsweise kann die Navigation des Futtermischwagens bis zum Futterlager, bei dem es sich beispielsweise um ein lang gestrecktes Flachsilo handeln kann, per GPS erfolgen und innerhalb des Futterlagers optisch.
Unterschiedliche Arten fahrerloser Transportfahrzeuge sind beispielsweise auch in der Wikipedia-Enzyklopädie beschrieben. Ein unter dem Titel "Fahrerloses Transportsystem" am 16. Oktober 2014 eingestelltes Dokument (URL:https://de.wikipedia.org/w/index.php?) erläutert Grundlagen über Navigationsverfahren in fahrerlosen Transportsystemen.
Speziell zur Rindviehfütterung sind Systeme bekannt, bei denen die Futtermittel zunächst in einer so genannten Futterküche bereitgestellt und von dort aus automatisch entnommen und den zu fütternden Tieren, beispielsweise mittels eines Förderbands oder eines Gondelsystems, vorgelegt werden. Diese Systeme haben den Nachteil, dass zur Bereitstellung der Futtermittel in der Futterküche auf nicht-autonome Verfahren, wie beispielsweise die Entnahme von Siloballen mittels bekannter U-Blockschneider zurückgegriffen werden muss.
Alternativ dazu sich auch Fütterungsverfahren bekannt, bei denen an sich bekannten, von einem Bediener gesteuerten, Futtermischwagen, die manuellen Bedienarbeiten teilweise (Assistenzsysteme) oder sogar vollständig (autonome Systeme) von der Futterentnahme aus einem Flachsilo bis zur Futtervorlage bedienerunabhängig gesteuert werden. Weiterhin ist aus dem von der Bundesanstalt für Landwirtschaft und Ernährung herausgegebenen Tagungsband "Innovationstage 2014 - Neue Ideen für den Markt" 15. Oktober 2014, Bonn, Seite 101, ein Futtermischwagen bekannt, bei welchem Laserscanner zur Navigation und Kartenerstellung (Simultaneous Localization and Mappinq) zum Einsatz kommen. Dabei wird während der Kartenerstellungsphase (Mapping) direkt eine 2D-Karte erzeugt. Aus DE 10 2012 107 508 B3 ist ein Verfahren bekannt, bei welchem ein Futtermischwagen zur Aufnahme des Futters aus einem Vorratslager zunächst zu einem vordefinierten Rasterpunkt des Flachsilo geleitet wird. Von diesem Rasterpunkt aus werden mittels wenigstens eines Scanners und/oder Sensors Positions- und/oder Qualitätsdaten der aus dem Flachsilo zu entnehmenden Futtermittel ermittelt. Die Datenaufnahme erfolgt entweder an der für die Entnahme vorgesehenen Seitenfläche des Silos oder an einer bereits vorhandenen Anschnittfläche.

Die Positions- und/oder Qualitätsdaten werden an den Rechner des Futtermischwagens übermittelt und zur Festlegung einer priorisierten Entnahmestelle herangezogen. Bei der priorisierten Entnahmestelle handelt es sich um den Punkt, von dem aus die Entnahme von Futter aus dem jeweiligen Vorratslager gestartet werden soll.

Um deutlicher auszudrücken, dass es sich bei der in DE 10 2012 107 508 B3 genannten Entnahmestelle um einen in X-, Y- und Z-Richtung festgelegten Punkt handelt, von dem aus der Entnahmevorgang beginnt, wird eine solche Entnahmestelle im Folgenden als Entnahmestartpunkt bezeichnet.

Nach Ermittlung des Entnahmestartpunktes wird der Futtermischwagen autonom zu diesem Startpunkt geleitet und nimmt dort das zu ladende Futter auf. Nachteilig an dem vorgeschlagenen Verfahren ist, dass der Einfluss unterschiedlicher und auch wechselnder Randbedingungen, hervorgerufen beispielsweise durch unterschiedliche Wetterbedingungen wie Regen, Nebel oder Schneetreiben, die von den Sensoren ermittelten Qualitäts- und oder Positionsdaten der zu entnehmenden Futtermittel verfälschen kann.

Weiterhin kann die Fixierung eines Rasterpunktes vor dem Flachsilo zu Problemen führen, da sich mit fortschreitender Entnahme von Futtermitteln aus diesem Silo die Entfernung zwischen dem Rasterpunkt und der Anschnittfläche im Flachsilo erhöht. Die zunehmende Entfernung kann, insbesondere bei Einwirken der genannten Wetter-Störgrößen die Datenermittlung mittels der dafür vorgesehenen Sensoren negativ beeinflussen.

Aus EP 2232982 A1 ist eine Maschine und ein Verfahren zum Schneiden von Silage bekannt, welches in der Lage ist, weitgehend autonom zu agieren. Zu diesem Zweck sind zur Entnahme von Silage aus einem Vorratslager Entnahmezyklen vorgesehen. Bei einem ersten Entnahmezyklus wird die Maschine zunächst durch einen Bediener manuell gesteuert. Hierzu wird der Futtermischwagen in eine Position gefahren, von der aus mittels einer am Futtermischwagen vorgesehenen Entnahmevorrichtung Silage aus dem Vorratslager abgetrennt und in einen ebenfalls am Futtermischwagen vorgesehenen Mischbehälter gefördert wird. Nach Durchführung einer ersten, manuell gesteuerten, Entnahme wird das Fahrzeug zu einem vorbestimmten Standort geleitet. Von diesem vorbestimmten Standort aus wird die Geometrie der Anschnittfläche des Silagehaufens mittels eines Scanners erfasst und in einer Datenspeichereinheit hinterlegt. Danach wird der Futtermischwagen zu den Orten geleitet, an denen das im Mischbehälter befindliche Futter ausgebracht werden soll.

Der erste Entnahmezyklus endet indem der Futtermischwagen an den vorbestimmten Standort geleitet wird, von dem aus beim ersten Entnahmezyklus die Geometrie der Anschnittfläche des Silagehaufens erfasst worden ist.

Der zweite und alle weiteren Entnahmezyklen können autonom ausgeführt werden. Hierzu wird zunächst die Geometrie der Anschnittfläche erneut mittels des Scanners erfasst. Die so erfasste Oberflächenstruktur wird mit dem rechnerintern gespeicherten Datensatz der vorherig erfassten Struktur verglichen. Soweit die Abweichung zwischen den beiden Abbildungen einen vorbestimmten Wert überschreitet, erfolgt eine Abschaltung der Systeme und eine Alarm-Meldung. Ursache für die Abweichung kann beispielsweise sein, dass ein Fremdkörper oder gar ein Tier bzw. eine Person sich im kritischen Bereich zwischen Futtermischwagen und Silageanschnittfläche befindet. Ein von der Alarmmeldung benachrichtigter Bediener kann die Störungsursache analysieren, beseitigen und das System neu starten.

Nachteilig an diesem System und an diesem Futtermischwagen ist, dass die Intelligenz des Systems nicht ausreicht, die Fehlerursache soweit zu analysieren, um ohne manuellen Eingriff eines Bedieners die Arbeit der Maschine fortzusetzen.

Aus WO 2008/118004 A1 ist ein unbemanntes Fahrzeug zur Ausgabe von Futter an ein Tier bekannt. Konkret soll dem Tier das Futter mittels eines Mundstückes bis in den Mund hinein serviert werden. Bei den Tieren kann es sich beispielsweise um Kühe handeln. In einer Herde mit einer Vielzahl von Kühen kann beispielsweise jeder Kuh individuell die Menge an Spezialfutter serviert bzw. zugänglich gemacht werden, die für diese Kuh vorgesehen ist.

Das autonome Fahrzeug verfügt über einen Mikroprozessor um zur Steuerung und Kontrolle der Fahrbewegung von und zum Futterladeplatz sowie von und zum Futterabgabeplatz. Weiterhin umfasst das autonome Fahrzeug ein betätigbares Ventil oder Mundstück, welches dem Tier zur Aufnahme der Nahrung unmittelbar zugeführt wird. Hierzu sind exakte 3D-Raumdaten erforderlich deren Verarbeitung aufwendige Rechenoperationen und damit leistungsstarke Prozessoren erfordert.

Aufgabe der Erfindung ist es, ein Verfahren vorzuschlagen, das die autonome Arbeitsweise des Futtermischwagens verbessert. Weiterhin ist es Aufgabe der Erfindung, einen Futtermischwagen vorzuschlagen, der Mittel zur Verbesserung der autonomen Arbeitsweise umfasst.

Diese Aufgabe wird gelöst durch ein Verfahren mit den Merkmalen des Anspruches 1.

Zur Beschreibung des erfindungsgemäßen Verfahrens wird im Folgenden zwischen drei Arten von im Umgebungsraum des Futtermischwagens befindlichen Objekten unterschieden:
- unbewegliche, statische, Objekte wie Gebäude, Mauern, Bäume;
- bewegliche, dynamische Objekte wie Maschinen, Fahrzeuge, Tiere, Personen;
- variable Objekte wie verschiebbare Wände, Türen, Futterhaufen.

Zur Durchführung des erfindungsgemäßen Verfahrens werden von einem Scanner und/oder einem anderen Sensor die Umgebungsdaten erfasst. Der Rechner ermittelt aus den erfassten Umgebungsdaten eine die Umgebung abbildende, dreidimensionale und aus Einzelpunkten bestehende, Punktwolke, wobei die Lage der Einzelpunkte jeweils durch eine Punktkoordinate definiert ist. Die Punktwolke bildet die zu einem bestimmten Zeitpunkt ermittelten Einzelpunkte der vom Scanner und/oder Sensor erfassten statischen, dynamischen und variablen Objekte ab.

Die momentane Ortsposition des Futtermischwagens wird als Startpunkt im Rechner definiert. Rechnerintern wird ein Fahrweg zwischen dem Startpunkt und einem vordefinierten Zielpunkt ermittelt. Im Rechner sind weiterhin Parameter, wie beispielsweise die Geometrie des Futtermischwagens, vordefiniert. Weitere Parameter können beispielsweise die Oberfläche des zu befahrenden Untergrundes betreffen, so dass beispielsweise etwaig vorhandene Schlaglöcher im Untergrund oder Bordsteinkanten auf ihre Befahrbarkeit hin überprüft werden können. Für diese Überprüfung werden die im Rechner vordefinierten Parameter mit der die Umgebung abbildenden Punktwolke abgeglichen. Weiterhin sind rechnerintern Kriterien, beispielsweise Mindestabstände, vordefiniert sind, die eine Korrektur des ermittelten Fahrweges zu einem neu berechneten Fahrweg ermöglichen.

Im Ergebnis ist der Futtermischwagen bei Anwendung des erfindungsgemäßen Verfahrens in der Lage, einen vorgesehenen Fahrweg autonom an situative Erfordernisse anzupassen bzw. einen neuen Fahrweg zum Zielpunkt festzulegen und den Steuer- und Antriebsaggregaten vorzugeben. Der Futtermischwagen ist somit nicht nur in der Lage, autonom einzelne Arbeitsprozesse abzuarbeiten, er verfügt vielmehr über eine eigene Intelligenz, mittels derer die vorgesehenen Arbeitsprozesse bei situativ variablen Randbedingungen anpassbar sind.

In einer bevorzugten Ausgestaltung des erfindungsgemäßen Verfahrens ist im Rechner eine statische, dreidimensionale Karte (im Folgenden: 3D-Karte) des Einsatzbereiches des Futtermischwagens hinterlegt. Diese 3D-Karte ist vorzugsweise auf einem speziellen Layer im Rechner hinterlegt.

Unter einem Layer wird hier und im Folgenden ein zwei- oder dreidimensionaler Datenraum, bzw. die Abbildung eines solchen Datenraumes auf einem Rechner, verstanden.

Auf der statischen 3D-Karte sind die Geometriedaten aller statischen Objekte, beispielweise der Gebäude, etwaige Begrenzungsmauern von Vorratslagern oder auch Bäume gespeichert. Die Bereiche, in denen solche unverrückbaren Einrichtungen vorhanden sind, werden rechnerintern, vorzugsweise unter Einbeziehung eines zu definierenden Sicherheitsabstandes, als nicht befahrbare Bereich definiert. Im Umkehrschluss können die verbleibenden Bereiche als grundsätzlich befahrbar definiert sein.

Die Positionsbestimmung bzw. Lokalisation der momentanen Position des Futtermischwagens erfolgt vorzugsweise durch Abgleich der von dem Scanner und/oder einem Sensor erfassten Ist-Umgebungsdaten mit der rechnerintern hinterlegten statischen 3D-Karte. Dabei sind rechnerintern Prozesse vorgesehen, bei denen aufgenommene Ist-Objekte mit in der 3D-Karte gespeicherten Objekten verglichen werden. Identifiziert der Rechner beispielsweise auf Basis der vom Scanner oder Sensor aufgenommenen Raumdaten in einem Abstand von 10 Metern eine Volumenstruktur, die identisch ist, mit einer auf der statischen 3D-Karte gespeicherten Volumenstruktur, beispielsweise einem Gebäude, so kann im Umkehrschluss ermittelt werden, dass die momentane Position des Futtermischwagens 10 Meter entfernt von der in der statischen Karte definierten Gebäudeposition ist.
Grundsätzlich ist die Objekt-Lokalisation auch möglich, wenn die Ist-Karte mit einem reinen 2D-Scan-System erfasst wird, jedoch ist die Lokalisation genauer und eindeutiger, wenn die Ist-Daten auf Basis eines 3D-Scan-Systemes erfolgen. Alternativ zu einem 3D-Scan-System kann ein 2D-Scan-Systemes vorgesehen sein, welches dahingehend modifiziert ist, dass es indirekt 3D-Daten liefert. Zu diesem Zweck wird ein 2D-Scanner, wie es im Folgenden noch beschrieben wird, in eine Schwenkbewegung versetzt.

Die Lokalisation des Futtermischwagens auf Basis eines 3D- oder modifizierten 2D-Scan-Systems zeichnet sich durch eine hohe Genauigkeit aus und ermöglicht, beispielweise bei nicht ebenen Hofflächen, eine bessere Kompensation von hieraus resultierenden Ungenauigkeiten. Erfindungsgemäß werden die statischen, dreidimensionalen Raumdaten zu einer Fläche komprimiert und vorzugsweise auf einer separaten Layerebene im Rechner gespeichert. Hierzu werden in einem X-Y-Z-Raumkoordinatensystem alle Z-Koordinaten statischer Objekte in die X-Y-Ebene projiziert. Die X-Y-Ebene ist vorzugsweise waagerecht ausgerichtet. In die X-Y-Ebene projizierte Z-Koordinaten statischer Objekte sind somit hinsichtlich ihrer Höhenposition im Raum nicht mehr definiert. Dies ist für die Navigation des Futtermischwagens in der Regel ausreichend. Vorteilhaft hierbei ist, dass die Steuerung des Futtermischwagens und dessen Navigation bei Verwendung einer statischen 2D-Karte mit darin vordefiniertem Fahrbereich die Anforderungen an die Leistungsfähigkeit des Rechners signifikant reduziert
Die vom Scanner und/oder mindestens einem Sensor ermittelten dreidimensionalen Ist-Daten bzw. die hieraus resultierende Ist-Karte wird somit in Bezug gesetzt zu einer statischen Karte, die vorzugsweise in einen 2D-Ebene komprimiert ist. Ein auf Basis der statischen 2D-Karte vorgesehene Fahrweg oder der zur Befahrung zugelassene Fahrbereich ist somit mit der Ist-Situation abgleichbar. Es kann überprüft werden, ob der vorgesehene Fahrweg den vordefinierten und im Rechner gespeicherten Befahrbarkeitsanforderungen entspricht oder ob sie im Hinblick auf die aktuelle Ist-Situation bzw. die Ist-Karte unbefahrbar ist

Wesentlich ist, dass der Futtermischwagen über Mittel verfügt, die es erlauben, die momentane Position des Futtermischwagens auf einer statischen, 2D- oder 3D-Karte abzubilden und dass Steuerprozesse vorgesehen sind, mittels derer der Futtermischwagen von der momentanen Position unter Berücksichtigung etwaiger Störobjekte autonom an die gewünschte Zielposition bewegbar ist. Dabei muss diese Bewegung nicht auf einer exakt definierten Route erfolgen, sondern darf vielmehr lediglich die als vorgesehenen Fahrbereich definierte Fläche nicht verlassen. Eine Korrektur eines zunächst vorgeplanten Fahrweges ist immer dann erforderlich, wenn auf Basis der aktuellen Ist-Situation, beispielsweise einem im Weg stehenden Hindernis, der zunächst vorgeplante Fahrweg als unbefahrbar erkannt wird.

Besonders bevorzugt ist es, dass Verfahren so zu konzipieren, dass durch die Rechnereinheit des Futtermischwagens bei Feststellen der Unbefahrbarkeit des vorgesehenen Fahrweges auf Basis der hinterlegten, 2D- oder 3D-Karte Alternativwege zur Erreichung des vorgesehenen Zielpunktes (Z) ermittelt werden. Hierbei können ggf. ermittelte unterschiedliche Alternativwege nach vordefinierten Kriterien, wie beispielweise dem Zeitbedarf zur Erreichung des Zielpunktes, untersucht werden. Ein daraufhin als optimal erkannter Fahrweg wird dann als Grundlage zur Weiterfahrt des Futtermischwagens zum Zielpunkt genutzt.

Durch die Verwendung von dreidimensionalen Daten und insbesondere durch den Vergleich einer statischen 2D- oder 3D-Karte mit einer situationsvariablen 3D-Istkarte lassen sich Oberflächendaten, wie beispielsweise die Silage-Anschnittfläche, oder auf dem vorgesehenen Fahrweg vorhandene Hindernisse, wie bewegliche Maschinen oder Personen, mit hoher Genauigkeit erfassen und der Futtermischwagen insgesamt situationsabhängig autonom steuern und fortbewegen.

Besonders vorteilhaft ist es, wenn die Überprüfung und Neufestlegung des Fahrweges kontinuierlich erfolgt. Zu diesem Zweck werden die Umgebungsdaten von dem wenigsten einen Scanner und/oder Sensor kontinuierlich ermittelt und rechnerintern mit gespeicherten Vorgabedaten abgeglichen.

In einer bevorzugten Ausgestaltung des erfindungsgemäßen Verfahrens ist als Scanner ein 2-D-Laserscanner vorgesehen, welcher um einen Yaw-Winkel drehbar ist bzw. gedreht wird. Unter dem genannten Yaw-Winkel, der in der Technik auch als Roll-Nick-Gier-Winkel (roll-pitch-yaw angle) bezeichnet wird, ist eine Möglichkeit zur Beschreibung der Orientierung eines Objektes im dreidimensionalen Raum zu verstehen. Mittels eines 2D-Scanner, der um den Yaw-Winkel rotiert, sind zweidimensionale Daten in unterschiedlichen Ebenen ermittelbar und aus den zweidimensionalen Daten der unterschiedlichen Rotations-Ebenen dreidimensionale Daten ableitbar. Ein solcher 2D-Scanner ist kostengünstiger als ein 3D-Scanner und liefert, wenn er in der beschriebenen Weise betrieben wird, ausreichend gute Rohdaten auf deren Basis die Umgebung dreidimensional abbildbar ist.

Der 2D-Scanner kann gegenüber der Bodenebene, bzw. der Standflächenebene des Futtermischwagens, um einen Winkel geschwenkt sein, so dass bei Drehung um den Yaw-Winkel in einem gewissen Abstand zum Scanner eine Art Brennpunkt gebildet wird. Mittels eines so geschwenkten 2D-Scanners lassen sich insbesondere senkrechte Objektstrukturen leichter identifizieren, als mit einem waagerecht ausgerichteten Scanner.

In einer vorteilhaften Ausgestaltung des Verfahrens werden auf Basis der dreidimensionalen Daten in vordefinierten Layerebenen 2D-Datensätze ermittelt. Diese virtuellen 2D-Layerebenen sind vorzugsweise horizontal ausgerichtet. Beispielsweise kann ein solcher 2D-Datensatz für den dreidimensionalen Raum erzeugt werden der für einen Futtermischwagen relevant ist. Relevant ist grundsätzlich der Bereich, den der Futtermischwagen als dreidimensionaler Körper einnimmt bzw. durchfährt. Für einen Futtermischwagen der beispielsweise eine Höhe von 3 Metern aufweist, sind somit grundsätzlich alle Hindernisse zwischen Boden und der genannten Höhe relevant.

Um festzustellen, ob ein vorgesehener Weg befahrbar ist oder nicht reicht die Feststellung aus, ob auf einer Breite, die der Breite des Futtermischwagens entspricht, ein Hindernis in einer Höhe zwischen Boden (Höhe 0) und Oberkante Futtermischwagen (Höhe 3 Meter) vorhanden ist. Diese Feststellung kann getroffen werden, in dem alle Raumpunkte zwischen der Höhe 0 und der Höhe 3 Meter in eine zweidimensionale Ebene projiziert werden. Im Umkehrschluss heißt das: Befindet sich im komprimierten 2D-Datensatz ein Punkt, so handelt es sich hierbei um den Punkt eines Körpers, der nicht überfahren werden darf sondern umfahren werden muss. Um diesen Punkt zu umfahren muss, ausgehend von dem genannten Punkt, der nächste Punkt eines im Raum befindlichen Körpers ermittelt werden. Ist der Abstand zwischen den beiden Punkten größer als die Breite des Futtermischwagens, so befindet sich zwischen den beiden Punkten eine für den Futtermischwagen befahrbare Gasse.

Der große Vorteil dieser Rechenoperation liegt darin, dass rechnerintern kein dreidimensionaler Raum auf seine Befahrbarkeit hin überprüft werden muss, sondern in einem ersten Schritt alle relevanten Punkte zwischen der Höhe Null und einem vordefinierten Wert in eine zweidimensionale Ebene projiziert werden und in einem zweiten Schritt dann die Befahrbarkeit innerhalb dieser zweidimensionalen Ebene untersucht wird. Durch die Reduktion der 3D-Ist-Geometriedaten auf eine 2D-Layerebene reduziert sich die Datenmenge signifikant. Im Ergebnis steigern sich die Auswertgeschwindigkeit und damit die dynamische Anpassung des Fahrweges.

Zwar ist grundsätzlich eine sehr feine Berechnung, die exakt an die Kontur des Futtermischwagens angepasst ist, möglich, jedoch ist eine etwas gröbere Berechnung in der Regel einerseits ausreichend und andererseits für den Rechner einfacher zu verarbeiten. So sind kleine auf dem Boden befindliche Steine und Futterreste für die Feststellung, ob diese Stelle befahrbar ist oder nicht, unerheblich. Vor diesem Hintergrund kann eine Höhenebene beispielsweise in einer Höhe von 5 cm definiert werden, unterhalb derer festgestellte Hindernisse als für die Befahrbarkeit der Route irrelevant definiert werden. In diesem Fall erzeugen somit nur Hindernisse, die sich in einer Höhe von mindestens 5 cm und maximal 3 Meter befinden, einen Punkt in der komprimierten 2D-Karte. Liegt auf der Fahrroute beispielsweise ein Futterrest mit einer Höhe von 7 cm, so wird ein Nichtbefahrbarkeitspunkt in der 2D-Karte erzeugt und diese Route als nicht befahrbar erkannt. Hat der Futterrest eine Höhe von lediglich 4 cm, so wird kein Punkt in der komprimierten 2D-Karte erzeugt und die Route ist unabhängig vom vorhandenen Futterrest grundsätzlich als Fahrroute freigegeben. Das Hindernis wird dann überfahren, es sei denn, es erfolgt auf Grund anderer Sensordaten ein Eingriff in die Steuerung. Bei diesen anderen Sensordaten kann es sich beispielsweise um die Daten eines Wärme-oder Magnetsensors handeln um sicherzustellten, dass bestimmte Objekte, beispielsweise kleine Tiere oder Metallteile, auch dann nicht überfahren werden, wenn sie nicht in die vordefinierte Höhenebene (im geschilderten Beispielfall: 5 cm) hineinragen.

Darüber hinaus ist selbstverständlich die Definition von Sicherheitsabständen möglich und auch vorteilhaft. Für einen Futtermischwagen mit einer Breite von zwei Metern und einer Höhe von 3 Metern kann beispielsweise nach oben und zu den Seiten hin ein Sicherheitsabstand von jeweils 10cm vorgesehen sein. Befindet sich das Hindernis dann in einer Höhe von 2,05 Metern, so erzeugt auch dieses Hindernis einen Punkt in der komprimierten 2D-Karte und die Route wird als nicht befahrbar klassifiziert.

Somit wird erkannt, ob auf dem vorgesehene Fahrweg im Bereich der Fahrzeugkontur Hindernisse vorhanden sind, die eine, vorzugsweise dynamische, Anpassung des Fahrweges an die aktuellen Gegebenheiten erfordern.

In einer weiteren bevorzugten Ausgestaltung des Verfahrens werden einzelne Messpunkte mit im Rechner gespeicherten Objekten und/oder Parametersätze dieser Objekte verglichen und auf dieser Basis klassifiziert. Bei den eingespeicherten Objekten kann es sich beispielsweise um Seitenwände, den Boden, unterschiedliche Futtermittel, Himmel oder andere, bekannte Hindernisse handeln. Dadurch dass die Objekte auf Grund einzelner Messpunkte identifiziert werden erübrigt es sich, für diese Objekte die kompletten 3D-Daten zu ermitteln. Die Objekte können somit in die Ermittlung des Fahrweges einbezogen werden ohne das permanent die vom Scanner oder Sensor erfasste, komplette 3D-Struktur für die Berechnung zugrunde gelegt werden muss.

Weiterhin kann vorgesehen sein, dass im Rechner Positionsinformationen statischer Objekte und/oder dynamischer Objekte und/oder variabler Objekte in unterschiedlichen zwei- oder dreidimensionalen Datenräumen hinterlegt sind. Die einzelnen Datenlayer lassen sich so benutzerfreundlich anpassen und verwalten. Beispielsweise ist es möglich, die Position unterschiedlicher variabler Objekte, wie unterschiedlicher Haufen von Silage bzw. Futtervorräten, situationsbezogen anzupassen. Beispielsweise kann ein Silolager, welches in einem Jahr als Maislager definiert war, in einem anderen Jahr als Graslager definiert werden. Oder es kann eine Freifläche mit einem - weiteren - Futtervorrat belegt werden.

In einer weiteren bevorzugten Ausgestaltung des Verfahrens umfasst der zur Ausübung des Verfahrens eingesetzte Futtermischwagen eine Entnahmevorrichtung um Futtermittel aus einem Vorratslager aufzunehmen. Dabei ist vorzugsweise vorgesehen, dass:
- der Futtermischwagen eine Entnahmevorrichtung umfasst,
- im Rechner für die Aufnahme unterschiedlicher Futtermittel unterschiedliche Entnahmestrategien zur Steuerung der Aufnahmevorrichtung gespeichert sind;
- mittels wenigstens eines Scanner und/oder Sensor die Struktur des Futtermittels im Bereich des Entnahmestartpunktes ermittelt und mit im Rechner gespeicherten Strukturen und/oder Parametersätzen von Futtermitteln verglichen wird;
- der identifizieren Struktur im Bereich des Entnahmestartpunktes auf Basis vordefinierter Kriterien eine Entnahmestrategie zugeordnet wird,
- der Rechner die Aufnahmevorrichtung mit der zugeordneten Entnahmestrategie angesteuert wird.

Unter einer Entnahmestrategie ist in diesem Zusammenhang eine an das jeweils aufzunehmende Futtermittel angepasste Steuerung der Aufnahmeeinrichtung zu verstehen. Die Aufnahmeeinrichtung des Futtermischwagens kann unterschiedliche Aggregate, wie Schneidschild und/oder Fräswalze und/oder Förderwalze umfassen. Der Antrieb dieser Aggregate ist variabel. Die Leistungsfähigkeit des Gesamtverfahrens, also der Beladung des Futtermischwagens mit unterschiedlichen Futtermitteln, wird verbessert, wenn die Entnahme eines Futtermittels mit der jeweils für dieses Futtermittel vorgewählten Entnahmestrategie erfolgt. So kann es beispielsweise sinnvoll sein, die Entnahmegeschwindigkeit bei schwer aus dem Vorratslager zu entnehmenden Futtermitteln zu reduzieren und bei leicht entnehmbaren Futtermitteln zu erhöhen.

Weiterhin können rechnerintern Kriterien vordefiniert und gespeichert sein, bei deren Feststellung das Verfahren zur Steuerung des Futtermischwagens mittels einer Not-Aus-Einrichtung gestoppt wird. Hierdurch erhöhen sich die Betriebssicherheit und der Schutz vor Schäden und/oder einem Maschinenausfall zusätzlich.

Auch innerhalb eines Stalles, in welchem der Futtermischwagen das zunächst eingeladene Futter ausbringen soll, bietet die Anwendung des erfindungsgemäßen Verfahrens Vorteile. So können beispielsweise im Stall befindlichen Kühe erfasst und deren Position in die Steuerung beispielsweise der Geschwindigkeit einbezogen werden.

Weiterhin kann der eingesetzte Scanner erfassen, ob im Futtergang noch Restmengen von Futter vorhanden sind, so dass die auszubringende Futterration an die noch vorhandene Futtermenge anpassbar ist.

Bei der Entnahme von Futter aus dem Vorratslager (Silo) kann vor der Entnahme die gesamte Anschnittfläche bzw. deren Oberflächenstruktur mittels des Scanners aufgenommen werden. Soweit dabei beispielsweise Futterabbrüche festgestellt werden, die in Form eines kleinen Futterhaufens vor der eigentlichen Anschnittfläche liegen, kann die Entnahmevorrichtung, bei der es sich vorzugsweise um eine auf- und abbewegliche Fräseinrichtung handelt, so gesteuert werden, dass der Fräsprozess zur Aufnahme des vorgelagerten Futterhaufens nicht über die Gesamthöhe des Vorratslager durchgeführt wird, sondern lediglich in dem Bereich, in dem sich tatsächlich Futter befindet. Leerfahrten der Entnahmevorrichtung werden so vermieden.

Im Gegensatz zu einem zyklisch ablaufenden Entnahmeprozess, bei dem die Futterentnahme jeweils an der Stelle fortgesetzt wird, an dem er bei der vorhergehenden Entnahme endete, ist eine solche Bezugnahme bei Anwendung des erfindungsgemäßen Verfahrens nicht erforderlich. Der Futtermischwagen kann vielmehr an das Vorratslager heranfahren, die aktuelle Ist-Situation erfassen und hieraus einen Startpunkt für die nächstfolgende Futterentnahme bestimmen. Somit ist grundsätzlich auch der Einsatz von mehreren Futtermischwagen möglich, die unabhängig voneinander Futter entnehmen und Tiere füttern.

Weiterhin ist die Einbindung der Fütterung in ein Fütterungsmanagement-System möglich. Die Daten von aus den Vorratslagern entnommenen Futtermengen, insbesondere Gewichts- und/oder Nährstoffdaten können erfasst und gespeichert oder an ein externes Computersystem beispielsweise per Funk übermittelt werden. Auf Basis der Geometriedaten der Silage-Anschnittfläche sowie der Position dieser Anschnittfläche im Vorratslagern lassen sich auch die Restmenge des noch im Vorratslager befindlichen Futters und hieraus die zeitliche Reichweite der Futterversorgung ermitteln. Soweit hierbei ein vordefinierter Wert unterschritten wird, kann vorgesehen sein, dass eine Meldung an das Futtermanagementsystem erfolgt, so dass der Bediener Maßnahmen ergreifen kann, die eine Weiterversorgung des Viehs mit Futter nach vollständiger Leerung des Vorratslagers ermöglichen. Beispielsweise kann in einem solchen Fall ein anderes Futterlager in den Fütterungsprozess integriert werden.

Unter Anwendung des erfindungsgemäßen Verfahrens kann weiterhin die Ansteuerung eines Entnahmestartpunktes im Silo optimiert werden. Dabei wird zunächst von einer ersten, vordefinierten Position aus, die sich in der Regel soweit vom Vorratslager entfernt befindet, dass auch bei gefülltem Vorratslager der Beginn der vordere bzw. erste Anschnittbereich des Futtervorrats vom Scanner erfasst und ein anzusteuernder Entnahmestartpunkt festgelegt. Bei der nachfolgenden Annäherung des Futtermischwagens an den Entnahmestartpunkt erfolgt eine Überprüfung der Lage des Entnahmestartpunktes von einer zweiten Position aus, die auf Grund ihrer geringeren Entfernung zum Messpunkt für die Datenermittlung günstiger ist, als die erste Position. Der vom ersten Rasterpunkt aus ermittelte Entnahmestartpunkt fungiert somit als eine Art erster Richtwert, auf dessen Basis der Futtermischwagen sich dem Entnahmebereich weiter annähert.

Dabei kommt es bei diesem ersten Richtwert noch nicht darauf an, dass der ermittelte Vorgabewert zentimeter- oder gar millimetergenau richtig ist. Wichtig ist lediglich, dass der Futtermischwagen nach Ermittlung des möglicherweise noch relativ ungenauen ersten Vorgabewertes auf den Entnahmestartpunkt zu geleitet werden kann. Von dem erfindungsgemäß vorgesehenen zweiten Rasterpunkt wird dann überprüft, ob die vom ersten Rasterpunkt aus erfolgte Positionsbestimmung des Entnahmestartpunktes korrekt war oder ob eine Nachjustierung erforderlich ist.

Besonders günstig ist es, wenn der Futtermischwagen nach Überprüfung und Neufestlegung des Entnahmestartpunktes vom zweiten Rasterpunkt zu einem dritten, vierten, n-ten Rasterpunkt geleitet wird, welcher sich jeweils zwischen dem zuvor angefahrenen Rasterpunkt und dem zuvor ermittelten Entnahmestartpunkt befindet, und wobei vom Rasterpunkt jeweils eine Neufestlegung des Entnahmestartpunktes erfolgt. Der Rechner des Futtermischwagens ermittelt den Entnahmestartpunkt somit iterativ von Rasterpunkt zu Rasterpunkt immer genauer und wird in die Lage versetzt, den Futtermischwagen mit immer feiner werdenden Lenkimpulsen an den Entnahmestartpunkt zu bewegen.

Um kostengünstige Sensoren verwenden und trotzdem den Entnahmestartpunkt präzise bestimmen zu können, wird in einer einfachen Ausführung des erfindungsgemäßen Verfahrens der Fahrantrieb des Futtermischwagens bei Erreichen eines Rasterpunkts gestoppt. Die Ermittlung des Entnahmestartpunktes erfolgt in diesem Fall bei am Rasterpunkt ortsfest stehendem Futtermischwagen.

Um den Zeitbedarf zur Futterentnahme zu reduzieren und die Gesamtleistung des Futtermischwagens zu erhöhen, wird in einer alternativen Ausführung der Fahrantrieb des Futtermischwagens bei Erreichen eines Rasterpunkts nicht gestoppt. Die Ermittlung des Entnahmestartpunktes erfolgt in diesem Fall dynamisch bei am Rasterpunkt fahrendem Futtermischwagen.

Da der Futtermischwagen sich dem Entnahmestartpunkt iterativ annähert, werden die Abweichungen zwischen zwei nacheinander ermittelten Entnahmestartpunkten von Neufestlegung zu Neufestlegung immer geringer. Bei nur noch geringem Abstand zum Entnahmestartpunkt bewegt sich die Abweichung üblicherweise im Millimeterbereich. Für eine störungsfreie Futteraufnahme ist eine exakte Ermittlung des Entnahmestartpunktes jedoch innerhalb eines vordefinierten Toleranzbereiches, der größer ist als die maximal erreichbare Genauigkeit, ausreichend. Darüber hinaus bewirken in geringer Entfernung zum Entnahmestartpunkt durchgeführte Lenkbewegungen entsprechend geringe Korrekturen. Es ist deshalb vorteilhaft, wenn nach Ermittlung des Entnahmestartpunktes eine Überprüfung und Neuermittlung nur dann erfolgt, wenn der Abstand zwischen dem Rasterpunkt, von dem aus der Entnahmestartpunkt ermittelt wurde und dem Entnahmestartpunkt einen vordefinierten Abstandwert (x) nicht unterschreitet. Vorzugsweise beträgt dieser vordefinierte Abstandswert einen Meter. Die Vordefinition anderer Abstandswerte, beispielsweise vor dem Hintergrund von futtermittelabhängigen Genauigkeitserfordernissen, ist jedoch nicht ausgeschlossen.

Die erfindungsgemäße Aufgabe wird weiterhin gelöst durch einen Futtermischwagen zur Ausführung des erfindungsgemäßen Verfahrens. Besonders bevorzugt ist dabei ein Futtermischwagen umfassend:
- ein autonom verfahr- und steuerbares Fahrgestell;
- Arbeitsorgane in Gestalt von einem Antriebsmotor, einem Fahrantrieb, einem Mischbehälter, einer Ausbringvorrichtung für Futtermittel, einer Wiegeeinrichtung für die aufzunehmende Futtermenge und einem Lenksystem für das Fahrgestell;
- mindestens einen Scanner und/oder mindestens einem Sensor zur Datenermittlung;
- mindestens einen mit den Scannern und/oder Sensoren zusammenwirkenden Rechner,
bei dem als Scanner ein 2-D-Laserscanner vorgesehen ist, welcher um einen Yaw-Winkel drehbar ist, so dass durch die Rotationsbewegung des Scanner zweidimensionale Daten in unterschiedlichen Ebenen ermittelbar sind und aus den zweidimensionalen Daten der unterschiedlichen Ebenen Daten einer den Umgebungsraum dreidimensional abbildenden Punktwolke ableitbar sind.

Ein 2D-Scanner ist kostengünstig und liefert, wenn er auf die beschriebene Weise betrieben wird, Daten, die die Erstellung einer 3D-Karte ermöglichen.

Die Erfindung wird nachstehend anhand der beigefügten Zeichnung beispielhaft näher erläutert.
- Fig. 1: zeigt die Seitenansicht eines an einem Rasterpunkt positionierten Futtermischwagens bei der Erfassung der Anschnittfläche eines Flachsilos;
- Fig. 2: zeigt die Draufsicht zu Fig. 1;
- Fig. 3: zeigt den Futtermischwagen in Arbeitsstellung;
- Fig. 4: zeigt die Draufsicht auf einen an einem Rasterpunkt positionierten Futtermischwagen in einer schematischen Darstellung;
- Fig. 5: zeigt die Draufsicht auf einen Futtermischwagen in einer schematischen Darstellung im Zusammenhang mit einer autonom durchgeführten Korrektur der Fahrroute;
- Fig. 6: zeigt einen Stall, mehrere Futtervorratslager und einen Futtermischwagen in einer perspektivischen Darstellung;
- Fig. 7: zeigt die Darstellung aus Fig. 6 in einer Draufsicht;
- Fig. 8: zeigt die Darstellung aus Fig. 7 unter Kenntlichmachung einer als Fahrbereich definierte Fläche.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

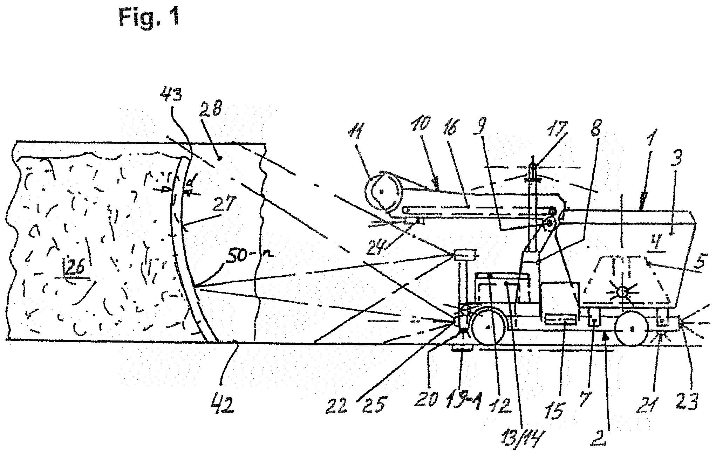

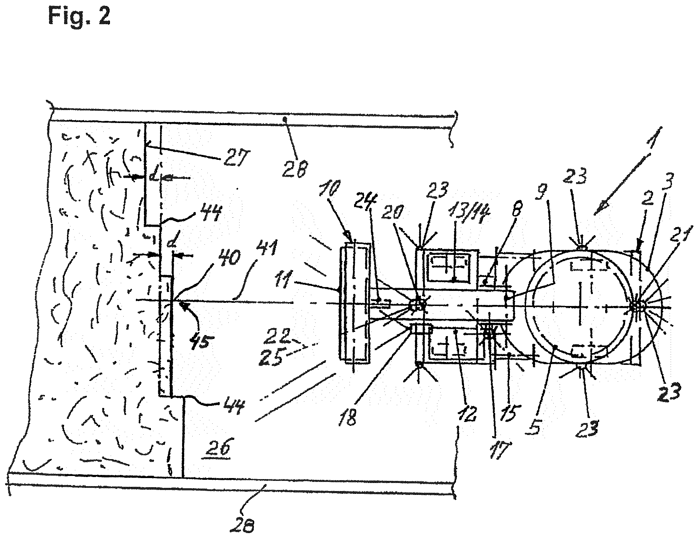

Die Figuren 1 und 2 zeigen im Wesentlichen den beispielhaften Aufbau eines Futtermischwagens 1. Bei dem dargestellten Futtermischwagen 1 handelt es sich um ein autonomes Fahrzeug ohne Fahrkabine für einen Bediener. Die Durchführung des erfindungsgemäßen Verfahrens ist jedoch selbstverständlich nicht nur an einem vollständig autonomen Fahrzeug möglich, sondern kann auch als Assistenzsystem in die Steuerung eines mit einem Fahrerplatz ausgestattetem Fahrzeug integriert werden.

Wesentlich für das erfindungsgemäße Verfahren ist nicht die Art des für die Ausführung von Teilfunktionen, wie Futterentnahme, Futtermischen und Futtervorlage, ausgewählte Aggregat. Wesentlich sind vielmehr die zur Realisation einer zumindest teilweise autonomen Steuerung erforderlichen Steuerungsprozesse bzw. Elemente, wie die entsprechender Sensoren.

Diese Elemente ermöglichen in einer ersten Stufe (Assistenzsystem) die autonome Steuerung von Teilaufgaben, insbesondere der Aufgabe "Futterentnahme". In einer 2. Stufe kann der Futtermischwagen 1 so konfiguriert sein, dass die gesamte Steuerungsarbeit autonom durchgeführt wird, so dass der Futtermischwagen 1 ohne Bediener einsetzbar ist.

Um für die Futterentnahme aus Flachsilos 26 mit dem zumindest teilweise autonomen Futtermischwagen 1 Positionsqualitäts-Daten des Futtervorrats zu erkennen, ist der Futtermischwagen 1 mit sensorgestützten Erfassungsgeräten, wie z. B. Scanner und Kamera, zur Steuerung der Fahr- und Arbeitsorgane ausgerüstet.

Der Futtermischwagen 1 besitzt ein Fahrgestell 2, welches mittels Wiegestäben 7 einen Mischbehälter 3 trägt, in dessen Mischraum 4 eine Mischschnecke 5 angeordnet ist. Am Fahrgestell 2 ist ein Tragrahmen 8 angeordnet, der auf einer Schwenkachse 9 eine Aufnahmevorrichtung 10 trägt, die am äußeren Ende mit einer Fräswalze 11 ausgestattet ist und über einen hydraulisch betätigten Hubzylinder auf- und abgesenkt wird. Alternativ zur Fräswalze 11 kann auch eine andere Aufnahmevorrichtung, beispielsweise ein Schneidschild oder eine Kombination aus Schneidschild und Förderwalze, vorgesehen sein. Ferner trägt das Fahrgestell 2 einen Antriebsmotor 12 für Fahrantrieb und Arbeitsorgane, einen Steuerblock 13 und einen Rechner 14, wobei der Rechner aus den von den Erfassungsgeräten er- und übermittelten Daten, in Abstimmung mit einem integrierten oder separaten Rechner einer Wiegereinrichtung, die Schaltvorgänge der Steuereinheit 13 regelt.

Im Speicher des Rechners 14 sind sich wiederholende Vorgänge einprogrammiert. Der Rechner 14 kann, z.B. über Funk, mit einem externen Rechner einer Leitstelle verbunden und jederzeit kontrollierbar sein. Zur Ausbringung des Futters ist der Futtermischwagen 1 mit einem Förderband 15 ausgestattet. Die am Futtermischwagen 1 angeordneten Scanner 17, 20, 21, 22 23, 24 ermöglichen die Durchführung unterschiedlicher Aufgaben.

Bei dem in Fig. 1 dargestellten Ausführungsbeispiel erfolgt die Spurführung des Futtermischwagens teilweise induktiv. Dabei dient der Scanner 20 der Führung des Futtermischwagens 1 entlang einer im Boden verlegten Leitschiene und positioniert den Futtermischwagen im Bereich des Flachsilos 26 an einem Rasterpunkt 19-1. Zur Unterstützung dieser Aufgabe dient ein weiterer Scanner 21. Alternativ zu der dargestellten induktiven Spurführung ist auch eine optische oder virtuelle (z.B. über GPS) Spurführung möglich.

Zur Absicherung und Hinderniserkennung nach vorn ist ein Scanner 22 angeordnet, dessen Aufgabe es ist, die geometrische Form der Stirnwand, bzw. der Anschnittfläche 27 des Flachsilos 26 zu erfassen. Seitlich angeordnete Scanner 23 dienen neben der Hinderniserkennung auch der Abstandsmessung, z. B. zu den Seitenwänden 28.

An der Rückseite beobachtet ein Scanner 23 aus Sicherheitsgründen das Umfeld. Ein an der Aufnahmevorrichtung 10 angeordneter Scanner 24 erfasst den Abstand zur Anschnittfläche 27 und ermittelt die Daten zur Festlegung der Schichtdicke d der abzufräsenden Futterschicht. Ein Infrarot-Sensor 25 und/oder eine Wärmebildkamera 18 orten den Entnahmebereich und bestimmen die dort vorgefundene Futterqualität in der Anschnittfläche 27.

Nicht ausgeschlossen ist, dass die den Scannern 17, 20, 21, 22, 23, 24 zugeordneten Aufgaben auf eine reduzierte Anzahl von Scannern, insbesondere einen zentral vorgesehenen Scanner 17, zusammengefasst werden.

Zum Start des autonomen Fütterungsprogramms wird über eine Zeitschaltuhr oder ein Signal der Leitstelle der Antriebsmotor 12 angelassen und der Futtermischwagen 1 mit angehobener Aufnahmevorrichtung 10 in Bewegung gesetzt. Von seiner Parkstation wird er zunächst vom Scanner 20 entlang einer Leitlinie geführt, wobei zur Hinderniserkennung weitere Scanner 23 aktiviert sind.

Alternativ zur Navigation entlang einer Leitlinie kann auch ein GPS-System 61 oder eine optische Navigation vorgesehen sein. Bei der optischen Navigation ortet und identifiziert ein Scanner 17 oder ein anderer Sensor statische Objekte im Sensor-Erfassungsbereich und bestimmt die relative Position des Futtermischwagens 1 im Verhältnis zu diesen statischen Objekten. Da die Position der statischen Objekte nicht variabel und zudem im Rechner 14 gespeichert ist, wird dann, ausgehend von der im Rechner 14 gespeicherten Position der statischen Objekte, rechnerintern ein Rückschluss auf die momentane Position des Futtermischwagens 1 gezogen.

Bei dem Scanner 17 handelt es sich um einen 2D-Laser-Scanner, der in einer um einen Winkel α geneigten Stellung am Futtermischwagen 1 angebracht ist. Der Scanner 17 kann innerhalb eines Arbeitsbereiches β von 190° Objekte erfassen. Der Scanner wird kontinuierlich um den Yaw-Winkel verschwenkt. Der 2D-Scanner 17 erfasst grundsätzlich die Objektdaten in der Ebene, in die er im Moment der Erfassung ausgerichtet ist. Dabei werden feste Strukturen als einzelne Punkte wahrgenommen. Der Scanner 17 wird in kleinen Zeit- und Winkeleinheiten bewegt und erfasst dabei jeweils Objekte innerhalb der gerade aktuellen Schwenkebene als Punkte. Die einzelnen Punkte der unterschiedlichen Erfassungsebenen werden an den Rechner 14 übermittelt und dort zu einer dreidimensionalen Punktwolke zusammengefügt. Diese dreidimensionale Punktwolke wird rechnerintern zu einer 3D-Ist-Karte des den Futtermischwagen aktuell umgebenden Raumes weiterverarbeitet.

Alternativ zu einem 2D-Scanner 17 ist auch ein 3D-Scanner einsetzbar, der die zur Bestimmung des Umgebungsraums erforderlichen Daten unmittelbar, vorzugsweise ohne Schwenken des Scanners um den genannten Yaw-Winkel, liefert.

Im Ausführungsbeispiel wird die 3D-Ist-Karte in Bezug gesetzt zu einer im Rechner 14 hinterlegten statischen 2D-Karte, in der eine zur Befahrung durch den Futtermischwagen freigegebene Fläche 68 definiert ist.

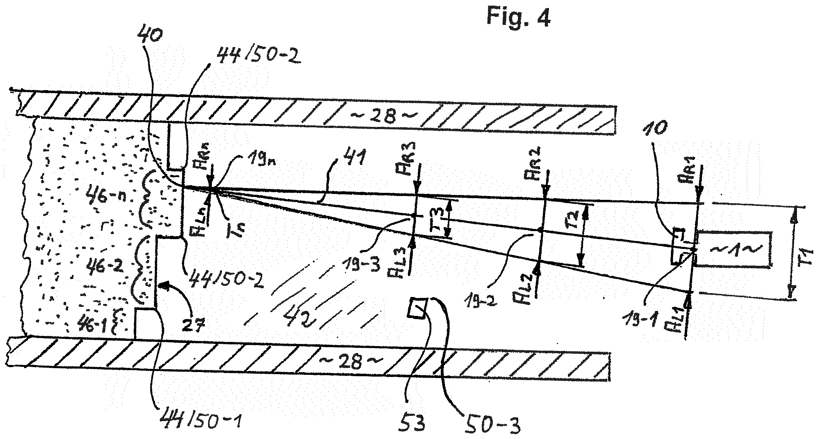

Fig. 4 zeigt einen am Flachsilo 26 angekommenen Futtermischwagen 1, der mittels des Scanners 20 im dargestellten Ausführungsbeispiel am Rasterpunkt 19-1 positioniert worden ist. Um im Flachsilobereich den Futtermischwagen flexibel navigieren zu können, verlässt dieser am Rasterpunkt 19-1 die Spurführung entlang einer Leitlinie und wechselt in ein Funkpeilsystem, z.B. unter Einsatz des bereits beschriebenen rotierbaren 2D-Scanners 17. Der Scanner 17 erfasst den Umgebungsraum, wobei zur Verbesserung der Datenerfassung ergänzend extra angeordneten Reflektoren im Flachsilobereich oder an vorhandenen Seitenwänden 28 oder dergleichen angeordnet sein können.

Vom Rasterpunkt 19-1 wird mittels eines Infrarotscanners 25 und/oder einer Infrarot-Wärmebildkamera 18 das Qualitätsgefüge der Silage in Form von Positionsqualitäts-Daten und mittels Scanner 22, vorrangig in Laserausführung, die geometrische Oberflächenstruktur an der Anschnittfläche 27 erfasst.

Der Zweck dieser Datenermittlung ist die Festlegung eines Entnahmestartpunktes 40 in Form einer dreidimensionalen Raumkoordinate, der dann autonom angesteuert wird.

Zur Festlegung des Entnahmestartpunktes 40 wird vorzugsweise folgendes Verfahren angewendet:
- die Anschnittfläche 27 wird auf das Vorhandensein von senkrechten Kanten 44 untersucht,
- sind in der Anschnittfläche 27 keine Kanten 44 identifizierbar, wird der Entnahmestartpunkt 40 auf einer senkrechten Projektionslinie der Anschnittfläche 27, deren Abstand zum Seitenrand des Flachsilos 26 bzw. ggf. zu einer Seitenwand 28 halb so breit ist, wie die Entnahmebreite der Aufnahmevorrichtung 10, festgelegt,
   ∘ kreuzt die senkrechte Projektionslinie 45 innerhalb der Anschnittfläche 27 eine waagerechte Kante, wird also ein Entnahmeansatz einer vorherigen Futtermittelentnahme identifiziert, so wird als Entnahmestartpunkt 40 der gefundenen Schnittpunkt definiert
   ∘ kreuzt die senkrechte Projektionslinie innerhalb der Anschnittfläche 27 keine waagerechte Kante, wird als Entnahmestartpunkt 40 der Schnittpunkt zwischen der Oberkante 43 der Anschnittfläche 27 und der Projektionslinie 45 definiert,
- sind in der Anschnittfläche 27 Kanten 44 identifizierbar, wird ein am weitesten in Richtung Futtermischwagen 1 herausstehende Block 46-n identifiziert (unter "Block" wird in diesem Zusammenhang der Bereich zwischen zwei Kanten 44 verstanden; vergl. Fig. 4: Blöcke 46-1, 46-2, 46-n),
- prüfe die Breite des Blockes 46-n,
   ∘ wenn Block 46-n schmaler ist als die Breite der Aufnahmevorrichtung 10 setze den Entnahmestartpunkt 40 mittig vor den Block,
   ∘ Prüfe, ob im Block 46-n eine waagerechte Kante vorhanden ist
      ▪ wenn waagerechte Kante vorhanden ist, wird als Entnahmestartpunkt 40 der Schnittpunkt von waagerechter Kante und Block-Mittenlinie gesetzt,
      ▪ wenn keine waagerechte Kante vorhanden ist, wird als Entnahmestartpunkt 40 der Schnittpunkt von Oberkante 43 und Block-Mittenlinie gesetzt,
   ∘ wenn der Block 46-n breiter ist als die Breite der Aufnahmevorrichtung 10: identifiziere die Kante, die den geringsten Abstand zur Mitte des Flachsilos 26 aufweist und setze den Entnahmestartpunkt 40 so, dass an dieser Kante die Entnahme beginnt,
- prüfe, ob der ermittelte Entnahmestartpunkt zu dicht an einer Wand 28 angeordnet ist, falls ja: korrigiere die Lage des Entnahmestartpunktes 40 so, dass eine Kollision zwischen Entnahmevorrichtung 10 und Wand 28 beim Entnahmevorgang ausgeschlossen ist.

Das vorgeschlagene Verfahren kann in Abhängigkeit von äußeren Randbedingungen, wie z.B. dem Aufbau des Flachsilos 26 bzw. anderer Futterlagereinrichtungen, selbstverständlich modifiziert werden. Wesentlich ist, dass ein standardisiertes Verfahren eingerichtet ist, welches im Ergebnis einen Entnahmestartpunkt 40 definiert, zu dem der Futtermischwagen im weiteren Verlauf des Entnahmevorgangs automatisch geleitet werden kann.

Darüber hinaus sind in das Fahrprogramm Routinen zur Erkennung von Fremdkörpern und 53 sowie Strategien zur Einbeziehung dieser Fremdkörper 53 in die Festlegung des Fahrwegs zum Entnahmestartpunkt hinterlegt.

Zur Erhöhung der Arbeitssicherheit ist ein Notaus-Programm vorgesehen, welches bei nicht vordefinierten Ereignissen sämtliche Antriebsfunktionen deaktiviert und ggf. einen Notruf an eine Leitstelle versendet.

Eine Unterstützung durch Videokamera oder über GPS-Navigation ist erforderlichenfalls möglich. Vom Rasterpunkt 19-1 steuert der Futtermischwagen 1 zielgerichtet den bereits ermittelten Entnahmestartpunkt 40 an.

Im dargestellten Ausführungsbeispiel erfolgt die Ermittlung des Entnahmestartpunktes 40 dynamisch, das heißt: bei fahrendem Futtermischwagen 1. Der Futtermischwagen wird ausgehend vom Rasterpunkt 19-1 auf einem virtuellen Leitstrahl 41 in Richtung Entnahmestartstelle gesteuert. Nach erstmaliger Ermittlung des Entnahmestartpunktes 40 erfolgt in vorgegebenen Zeit- und/oder Wegabständen an weiteren Rasterpunkten 19-2, 19-3, ... 19-n eine Neuberechnung des Entnahmestartpunktes 40 und ggf. eine Korrektur des vorgesehenen Fahrweges.

In Fig. 4 ist die Annäherung des Futtermischwagens an den Entnahmestartpunkt 40 schematisch dargestellt. Am Rasterpunkt 19-1 ist ein relativ großer Toleranzbereich T1 mit einer möglichen Abweichung nach rechts AR1 und einer möglichen Abweichung nach Links AL1 vorhanden. Das heißt: Würde der Futtermischwagen aus der Position 19-1 ohne weitere Nachjustierung auf den Entnahmestartpunkt 40 zu fahren, so könnte seine tatsächliche Position bei Erreichen des Entnahmestartpunktes 40 innerhalb des Toleranzfeldes T1 von der idealen Position abweichen.

Bei Erreichen des Rasterpunktes 19-2 findet eine Neuberechnung des Entnahmestartpunktes 40 statt. Da die Entfernung des Rasterpunktes 19-2 zum Entnahmestartpunkt 40 geringer ist als vom Rasterpunkt 19-1 aus, bewirkt eine zwar prozentual gleich große Abweichung vom idealen Leitstrahl 41 eine Verringerung der Abweichung als absolutes Maß. Während beispielsweise das Toleranzfeld T1 am Rasterpunkt 19-1 plus/minus 10 cm betragen kann, so beträgt das Toleranzfeld T2 am Rasterpunkt 19-2 nur noch plus/minus 8 cm.

Eine einmalige Neuberechnung des Entnahmestartpunktes auf halber Strecke bewirkt somit eine Reduktion des Toleranzfeldes um 50%. Je häufiger eine Neuberechnung an weiteren Rasterpunkten 19-2, ...., 19-n durchgeführt wird, desto genauer wird der Futtermischwagen 1 am Leitstrahl 41 entlang auf den Entnahmestartpunkt 40 zugeführt und desto geringer ist bei Erreichen des Entnahmestartpunktes 40 die Differenz zwischen der tatsächlichen Position des Futtermischwagens und dem idealen Entnahmestartpunkt 40. Der Futtermischwagen 1 nähert sich somit iterativ der Entnahmestelle 40 an.

In einem vordefinierten Abstand des Futtermischwagens zum Entnahmestartpunkt 40 wird die kontinuierliche Neuberechnung eingestellt und ein Programm zur ebenfalls automatisierten Entnahme des Futters mittels der Aufnahmevorrichtung 10 gestartet.

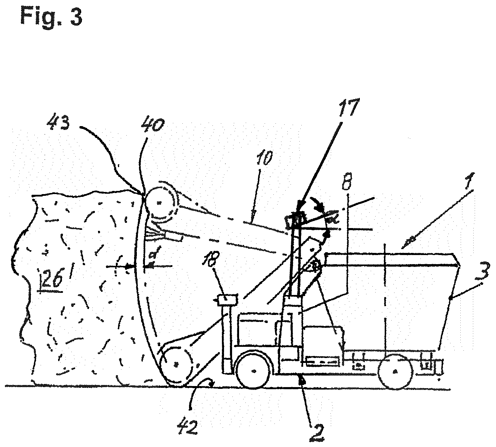

Fig. 3 zeigt den Futtermischwagen nach bzw. bei Erreichen des Entnahmestartpunktes 40. Der Entnahmestartpunkt 40 befindet sich an der Oberkante 43 des Flachsilos 26 angeordnet ist, wird die Aufnahmevorrichtung 10 an die Oberkante der Anschnittfläche des Flachsilos 26 geführt, wobei mittels eines Scanners 24 die Schichtdicke d) der zu entnehmenden Futterschicht bestimmt wird. Falls der der Entnahmestartpunkt 40 nicht an der Oberkante 43 des Flachsilos 26 angeordnet ist, sondern im Bereich zwischen Boden 42 und Oberkante 43, beispielsweise an einem dort vorhandenen Ansatz einer vorherigen Futterentnahme, so entnimmt die Aufnahmevorrichtung 10 das Futter zielgerichtet von dieser Absatzstelle aus auf. Beim Absenken der Aufnahmevorrichtung 10 trennt die rotierende Fräswalze 11 die entsprechende Futterschicht ab. Das Futter wird über ein Förderband 16 im Schacht der Aufnahmevorrichtung 16 dem Mischbehälter 3 zugeführt.

Ist im Mischbehälter 3 die einprogrammierte, über Wiegestäbe 7 gemessene Gewichtsmenge erreicht, wird dieses von der Wiegeeinrichtung dem Rechner 14 übermittelt, welcher umgehend das Signal zur Beendigung der Futterentnahme gibt.

Der Futtermischwagen 1 fährt anschließend, z. B. von einem Grassilo zu einem Rasterpunkt eines Maissilos, wo er ebenfalls mit den bekannten Arbeitsschritten eine Futtermenge bis zur Erreichung des einprogrammierten Gewichts aufnimmt.

Nach der Futterentnahme aus dem Flachsilo kann der Futtermischwagen 1 wieder dem bereits erwähnten spurgeführten Leitsystem überstellt werden. Falls vorgesehen, kann er zu einer Zwischenstation geleitet werden und dort z. B. Kraftfutter aufnehmen. Die aufgenommenen Futtersorten werden nach Beendigung des durch die rotierende Mischschnecke 5 bewirkten Mischvorganges als homogenes Mischfutter über das Förderband 15 in einem Futtergang abgelegt.

Alternativ zur dargestellten Kombination der Spurführung über virtuelle, optische und induktive Teilelemente ist es auch möglich, die Steuerung so zu konfigurieren, dass die Spurführung im Gesamtsystem, d.h.: im gesamten Bewegungsraum des Futtermischwagens, ausschließlich optisch, virtuell oder induktiv erfolgt.

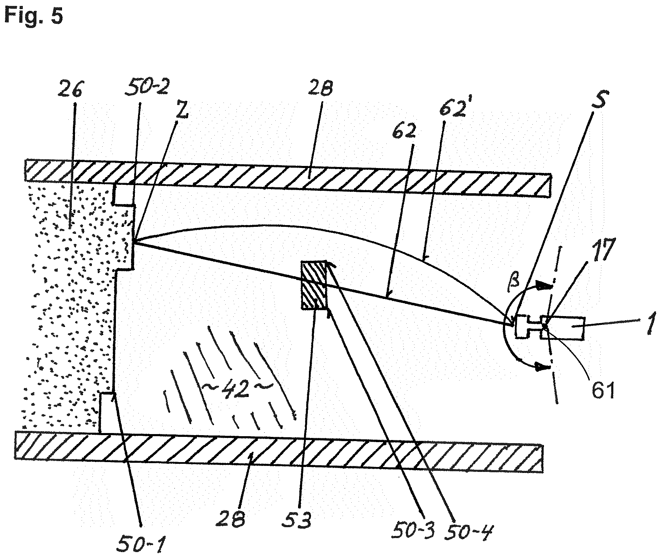

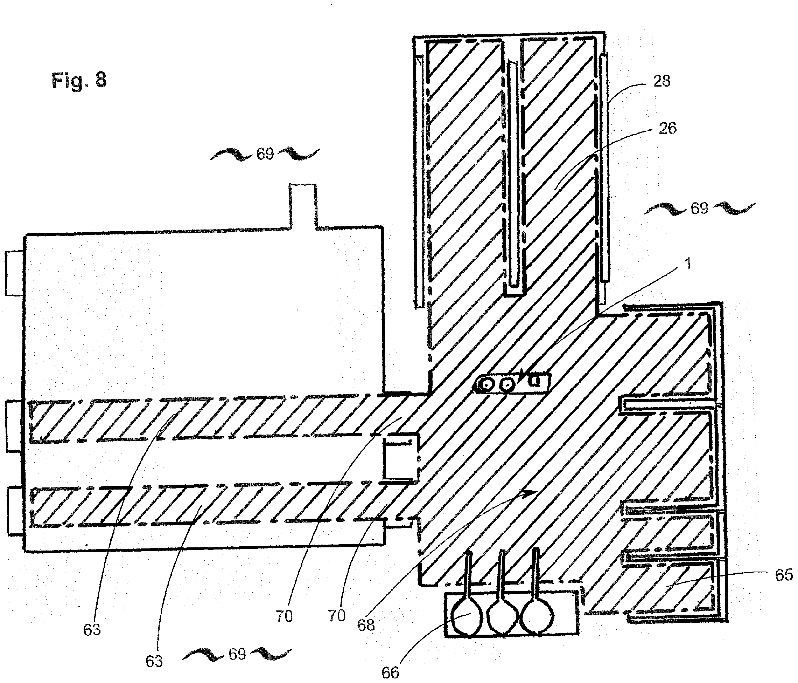

Fig. 5 zeigt die autonome Korrektur eines zunächst vorgesehen Fahrweges 62 zu einem Fahrweg 62'. Der Fahrweg 62 bildet die kürzeste Verbindung zwischen einem Startpunkt S und einem Zielpunkt Z und stellt somit grundsätzlich einen bevorzugten Fahrweg dar. Allerdings befindet sich auf diesem Fahrweg 62 bei der in Fig. 5 dargestellten Situation ein Objekt 53. Der Scanner 17 ermittelt die Koordinaten von in der Umgebung detektierbaren Einzelpunkten 50-1, 50-2, 50-n. Die Geometriedaten des Objektes 53 umfassen insbesondere dessen Eckpunkte 50-3 und 50-4. Rechnerintern wird das detektierte Objekt 53 in Bezug gesetzt zu der einer als frei befahrbar definierten Fläche, dem Fahrbereich 68 (vergl. Fig. 8) und dort eingeordnet.

Nach Einordnung des Objektes 53 sind Rechenprozesse zur Ermittlung eines alternativen Fahrweges 62' vorgesehen. Bei Abgleich des Objektpunktes 50-4 mit der Lage der Seitenwand 28, die ein in der statischen 2D-Karte hinterlegtes statisches Objekt darstellt, wird festgestellt, dass der Abstand zwischen Seitenwand 28 und Objektpunkt 50-4 für eine Durchfahrt des Futtermischwagens 1 ausreichend breit ist. Hieraus ergibt sich als neue Verbindungsstrecke zwischen dem Startpunkt S und dem Zielpunkt Z ein Fahrweg 62'. Vorzugsweise ist vorgesehen, dass der Rechner 14 auf diese Weise nicht nur einen alternativen Fahrweg 62' ermittelt, sondern mehrere potentielle Alternativen prüft und schließlich auf Basis vordefinierter Kriterien einen als optimal bestimmten Fahrweg 62' auswählt.

Die Ermittlung des Fahrweges 62' und die darauf basierende Steuerung der Weiterfahrt des Futtermischwagens 1 erfolgt autonom, d.h. ohne Eingriff einer Bedienperson, und in Echtzeit. Rechnerintern wird die Befahrbarkeit des jeweils aktuell vorgesehenen Fahrweges 62 kontinuierlich überprüft und ggf. zu einem neuen Fahrweg 62' angepasst.

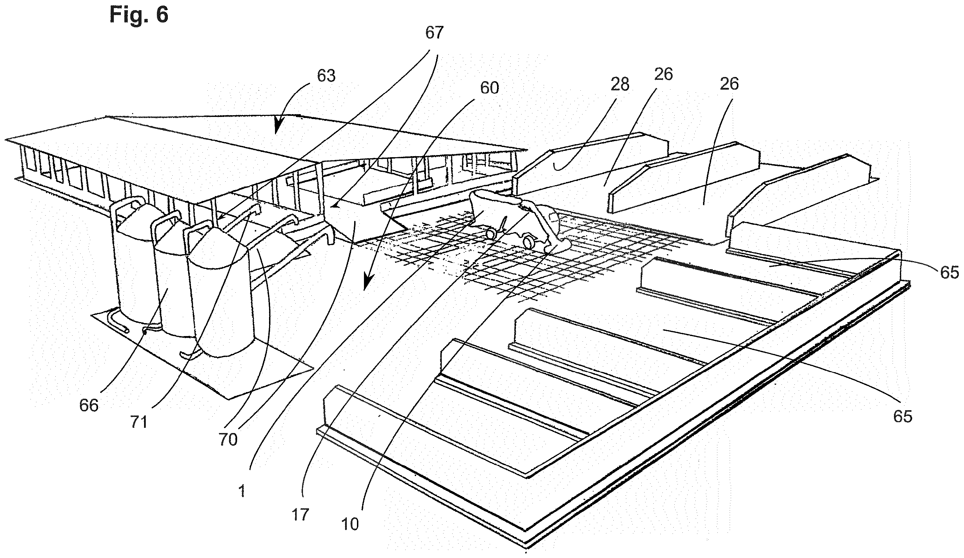

Fig. 6 zeigt den Futtermischwagen 1 in einer beispielhaften Arbeitsumgebung. Der Futtermischwagen 1 befindet sich auf einem zentral angeordneten Hofbereich 60. Der Hofbereich 60 wird umgeben von verschiedenen Futter-Lagerstätten 26, 65, 66 sowie dem Stall 63. Bei den Futterlagerstätten handelt es sich um Hochsilos 66 und Fahrsilos 26 und 65. In den Fahrsilos 26 werden vorzugsweise Grundfutterarten wie Gras und Mais gelagert, die Fahrsilos 65 dienen zur Aufnahme von weiteren Futterkomponenten, beispielweise Soja oder Treber. Die Befüllung des Mischbehälters 2 erfolgt entweder mittels einer am Futtermischwagen vorgesehenen Aufnahmevorrichtung 10 oder durch eine an der Futterlagerstätte vorgesehen Befülleinrichtung, beispielsweise einem am Hochsilo 66 angebrachten Futter-Elevator 71.

Nachdem der Futtermischwagen 1 auf Basis vorgegebener Rezepturen befüllt worden ist, werden die unterschiedlichen Komponenten zu einem homogenen Mischfutter verarbeitet. Das Mischfutter wird auf einem Futtergang 67 eines Stalles 63 in der Regel schwadförmig abgelegt und den im Stall gehaltenen Tieren zur Aufnahme angeboten. Der Stall bzw. die Futtergänge 67 sind für den Futtermischwagen 1 vom Hofbereich 60 her über leicht ansteigende Rampen 70 zugänglich ist.

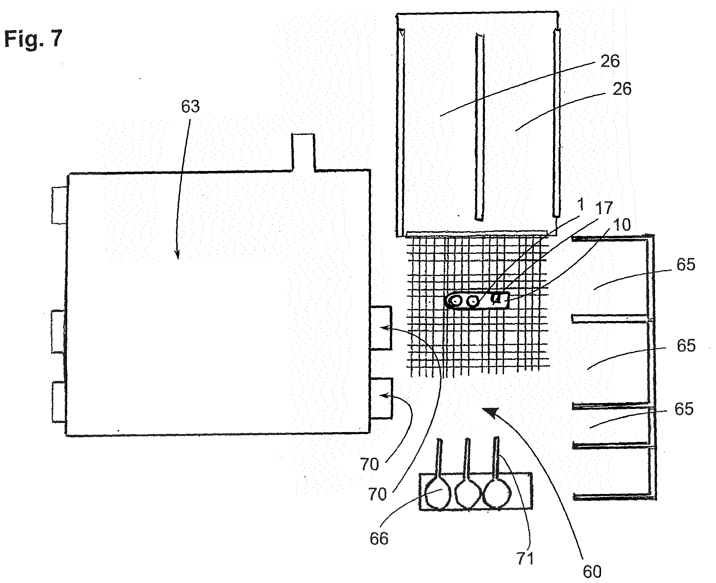

Die Figuren 7 und 8 zeigen eine Draufsicht auf die in Figur 6 dargestellten Einrichtungen. Fig. 8 stellt zudem die als für den Futtermischwagen frei befahrbar definierte Fläche 68 und eine als nicht befahrbar definierte Fläche 69 dar. Die frei befahrbare Fläche 68 ist auf dem Rechner 14 des Futtermischwagens 1 auf einem dafür vorgesehenen Layer hinterlegt. Alternativ zu einer frei befahrbaren Fläche 68 kann auch ein frei befahrbarere, dreidimensionaler, Raum auf dem Rechner 14 hinterlegt sein.

Nach Abschluss der Entnahme- und/oder Fütterungsarbeit fährt der Futtermischwagen 1 zur Parkstation zurück und wartet auf den nächsten vorprogrammierten Einsatz.

Der Futtermischwagen 1 kann stetig von einer Leitstelle überwacht und von dort aus bei Bedarf jederzeit gesteuert werden. Manuelle Eingriffe in das Steuerungssystem sind erforderlichenfalls jederzeit möglich.

**Bezugszeichenliste:**

| | | | |
|---|---|---|---|
| 1 | Futtermischwagen | 27 | Anschnittfläche |
| 2 | Fahrgestell | 28 | Seitenwand |
| 3 | Mischbehälter | 29 | - |
| 4 | Mischraum | 30 | - |
| 5 | Mischschnecke | 31 | - |
| 6 | - | 32 | - |
| 7 | Wiegestab | 33 | - |
| 8 | Tragrahmen | 34 | - |
| 9 | Schwenkachse | 35 | - |
| 10 | Aufnahmevorrichtung | 36 | - |
| 11 | Fräswalze | 37 | - |
| 12 | Antriebsmotor | 38 | - |
| 13 | Steuereinheit | 39 | - |
| 14 | Rechner | 40 | Entnahmestartpunkt |
| 15 | Förderband (Austragung) | 41 | Leitstrahl |
| 16 | Förderband (Aufnahme) | 42 | Boden |
| 17 | Scanner (Laserscanner) | 43 | Oberkante |
| 18 | Wärmebildkamera | 44 | senkrechte Kante (der Anschnittfläche) |
| 19-1, 19-2, ... 19-n : | Rasterpunkt | 45 | Projektionslinie |
| 20 | Scanner (Fahrzeugführung) | 46-1, 46-2, ... 46-n : | Block |
| 21 | Scanner (Fahrzeugführung hinten) | 47 | - |
| 22 | Scanner (geometrische Form) | 48 | - |
| 23 | Scanner (Hinderniserkennung) | 49 | - |
| 24 | Scanner (Dickenmessung) | 50-1, 50-2, ... 50-n : | Einzelpunkt |
| 25 | Infrarotsensor | 51 | - |
| 26 | Flachsilo | 52 | - |
| 53 | Fremdkörper | d | Schichtdicke |
| 54 | - | T1, T2, .. Tn : | Toleranzfeld |
| 55 | - | A_{R1}, A_{R2}, ... A_{Rn} : | Abweichung rechts |
| 56 | - | A_{L1}, A_{L2}, ... A_{Ln}, | Abweichung links |
| 57 | - | S | Startpunkt |
| 58 | - | Z | Zielpunkt |
| 59 | - | α | Winkel (Neigung des Scanners) |
| 60 | Hofbereich | β | Winkel (Arbeitsbereich des Sca.) |
| 61 | Sensor (GPS-Sensor) | | |
| 62, 62' | Fahrweg | | |
| 63 | Stall | | |
| 64 | - | | |
| 65 | Fahrsilo | | |
| 66 | Hochsilo | | |
| 67 | Futtergang | | |
| 68 | Fläche (frei befahrbar) | | |
| 69 | Fläche (nicht befahrbar) | | |
| 70 | Rampe | | |
| 71 | Elevator | | |
| 72 | - | | |

## Patentansprüche

1. Verfahren zur Steuerung eines Futtermischwagens (1) von einem Startpunkt (S) zu einem Zielpunkt (Z), wobei der Futtermischwagen (1) folgende Komponenten umfasst:
- ein autonom verfahr- und steuerbares Fahrgestell (2);
- Arbeitsorgane in Gestalt von einem Antriebsmotor (12), einem Fahrantrieb, einem Mischbehälter (3), einer Ausbringvorrichtung für Futtermittel, einer Wiegeeinrichtung für die aufzunehmende Futtermenge und einem Lenksystem für das Fahrgestell (2);
- mindestens einen Scanner (17, 20, 21, 22, 23, 24) und/oder mindestens einem Sensor (18, 25) zur Datenermittlung;
- mindestens einen mit den Scannern und/oder Sensoren zusammenwirkenden Rechner (14)
- der Scanner (17, 20, 21, 22, 23, 24) und/oder mindestens eine Sensor (18, 25) Umgebungsdaten erfasst,
**dadurch gekennzeichnet, dass**
- der Rechner (14) aus den erfassten Umgebungsdaten eine die Umgebung abbildende, dreidimensionale und aus Einzelpunkten (50-1, 50-2,....., 50-n) bestehende, Punktwolke ermittelt, wobei die Lage der Einzelpunkte (50-1, 50-2, 50-3, ...., 50-n) jeweils durch eine Punktkoordinate definiert ist und die Punktwolke insgesamt die situative Raumumgebung charakterisiert,
- auf Basis einer statischen, dreidimensionalen Karte eine 2D-Karte ermittelt wird durch die Komprimierung der die dritte Ebene betreffenden Daten in eine Fläche und die vom Scanner (17, 20, 21, 22, 23, 24) und/oder mindestens einem Sensor (18, 25) ermittelten Daten in Bezug gesetzt werden zu der statischen, zweidimensionalen Karte, so dass ein auf Basis der statischen Karte vorgesehener Fahrweg (62) mit der Istsituation abgleichbar ist und überprüfbar ist, ob der vorgesehene Fahrweg (62) vordefinierten und im Rechner (14) gespeicherten Befahrbarkeitsanforderungen entspricht,
- die Ortsposition des Futtermischwagens (1) erfasst und als Startpunkt (S) im Rechner (14) definiert wird,
- der Rechner (14) einen Fahrweg (62) zwischen dem Startpunkt (S) und einem vordefinierten Zielpunkt (Z) ermittelt,
- im Rechner (14) vordefinierte Parameter mit der die Umgebung abbildenden Punktwolke abgeglichen werden,
- im Rechner (14) Kriterien vordefiniert sind, die eine Korrektur des ermittelten Fahrweges (62) zu einem neu berechneten Fahrweg (62') ermöglichen,
so dass der Fahrweg (62) des Futtermischwagens (1) auf seine Befahrbarkeit hin überprüfbar ist und im Falle einer festgestellten Unbefahrbarkeit autonom an die Erfordernisse der situativen Raumumgebung anpassbar und durch einen alternativen Fahrweg (62') ersetzbar ist.

2. Verfahren zur Steuerung eines Futtermischwagens (1) nach Anspruch 1, **dadurch gekennzeichnet, dass** im Rechner (14) eine statische, dreidimensionale Karte des Einsatzbereiches des Futtermischwagens (1) hinterlegt ist und die vom Scanner (17, 20, 21, 22, 23, 24) und/oder mindestens einem Sensor (18, 25) ermittelten Daten in Bezug gesetzt werden zu der statischen, dreidimensionalen Karte, so dass ein auf Basis der statischen Karte vorgesehener Fahrweg (62) mit der Istsituation abgleichbar ist und überprüfbar ist, ob der vorgesehene Fahrweg (62) vordefinierten und im Rechner (14) gespeicherten Befahrbarkeitsanforderungen entspricht.

3. Verfahren zur Steuerung eines Futtermischwagens (1) nach einem der Ansprüche 1 oder 2, **dadurch gekennzeichnet, dass** bei Unbefahrbarkeit des vorgesehenen Fahrweges (62) auf Basis der hinterlegten, zwei- oder dreidimensionalen Karte mittels des Rechners 14 autonom ein alternativer Fahrweg (62') zur Erreichung des vorgesehenen Zielpunktes (Z) ermittelt und zur Ansteuerung des Zielpunktes (Z) verwendet wird.

4. Verfahren zur Steuerung eines Futtermischwagens (1) nach einem der Ansprüche 1 bis 3, **dadurch gekennzeichnet, dass** die Überprüfung des Fahrweges (62) auf seine Befahrbarkeit kontinuierlich erfolgt.

5. Verfahren zur Steuerung eines Futtermischwagens (1) nach einem der Ansprüche 1 bis 4, **dadurch gekennzeichnet, dass** als Scanner (17, 20, 21, 22, 23, 24) ein 2-D-Laserscanner vorgesehen ist, welcher um einen Yaw-Winkel gedreht wird, so dass durch die Rotationsbewegung des Scanner (17, 20, 21, 22, 23, 24) zweidimensionale Daten in unterschiedlichen Ebenen ermittelbar sind und aus den zweidimensionalen Daten der unterschiedlichen Ebenen Daten einer den Umgebungsraum dreidimensional abbildenden Punktwolke ableitbar sind.

6. Verfahren zur Steuerung eines Futtermischwagens (1) nach einem der Ansprüche 1 bis 5, **dadurch gekennzeichnet, dass** im Rechner (14) Positionsinformationen statischer Objekte und/oder dynamischer Objekte und/oder variabler Objekte in unterschiedlichen zwei- oder dreidimensionalen Datenräumen hinterlegt sind.

7. Verfahren zur Steuerung eines Futtermischwagens (1) nach einem der Ansprüche 1 bis 6, **dadurch gekennzeichnet, dass**
- die Einzelpunkte (50-1, 50-2, ... 50-n) mit im Rechner (14) gespeicherten Objekten und/oder Parametersätze dieser Objekte wie beispielsweise Seitenwand (28), Boden (42), unterschiedlicher Futtermittel (51, 52), Himmel, Hindernis (52) verglichen und auf dieser Basis klassifiziert werden;
- die Einzelpunkte (50-1, 50-2, ... 50-n) und/oder die auf Basis der Einzelpunkte identifizierten Objekte vom Rechner (14) in die Ermittlung des Fahrweges (62, 62') einbezogen werden.

8. Verfahren zur Steuerung eines Futtermischwagens nach einem der Ansprüche 1 bis 7, **dadurch gekennzeichnet, dass**
- der Futtermischwagen (1) eine Entnahmevorrichtung (10) umfasst,
- im Rechner (14) für die Aufnahme unterschiedlicher Futtermittel unterschiedliche Entnahmestrategien zur Steuerung der Aufnahmevorrichtung (10) gespeichert sind;
- mittels wenigstens eines Scanner (17, 20, 21, 22, 23, 24) und/oder Sensor (18, 25) die Struktur des Futtermittels im Bereich des Entnahmestartpunktes (40) ermittelt und mit im Rechner (14) gespeicherten Strukturen und/oder Parametersätzen von Futtermitteln verglichen wird;
- der identifizieren Struktur im Bereich des Entnahmestartpunktes (40) auf Basis vordefinierter Kriterien eine Entnahmestrategie zugeordnet wird,
- der Rechner (14) die Aufnahmevorrichtung (10) mit der zugeordneten Entnahmestrategie angesteuert wird.

9. Verfahren zur Steuerung eines Futtermischwagens nach einem der Ansprüche 1 bis 8, **dadurch gekennzeichnet, dass** rechnerintern Kriterien vordefiniert sind, bei deren Erfüllung der Betrieb des Futtermischwagen mittels einer Not-Aus-Einrichtung gestoppt wird.

10. Futtermischwagen (1) umfassend:
- ein autonom verfahr- und steuerbares Fahrgestell (2);
- Arbeitsorgane in Gestalt von einem Antriebsmotor (12), einem Fahrantrieb, einem Mischbehälter (3), einer Ausbringvorrichtung für Futtermittel, einer Wiegeeinrichtung für die aufzunehmende Futtermenge und einem Lenksystem für das Fahrgestell (2);
- mindestens einen Scanner (17, 20, 21, 22, 23, 24) und/oder mindestens einem Sensor (18, 25) zur Datenermittlung;
- mindestens einen mit den Scannern und/oder Sensoren zusammenwirkenden Rechner (14),
**dadurch gekennzeichnet, dass** der Rechner (14) eingerichtet ist, das Verfahren nach einem der Ansprüche 1 bis 9 auszuführen.

## Claims

1. Method for controlling a feed mixing vehicle (1) from a starting point (S) to a destination point (Z), wherein the feed mixing vehicle (1) comprises the following components:
- an autonomously movable and controllable chassis (2) ;
- working elements in the form of a drive engine (12), a traction drive, a mixing container (3), a discharge device for feedstuffs, a weighing device for the quantity of feed which is to be received and a steering system for the chassis (2);
- at least one scanner (17, 20, 21, 22, 23, 24) and/or at least one sensor (18, 25) for transmitting data;
- at least one computer (14) which interacts with the scanners and/or sensors,
- the scanner (17, 20, 21, 22, 23, 24) and/or at least one sensor (18, 25) acquires surroundings data,
**characterized in that**
- the computer (14) determines from the acquired surroundings data a three-dimensional point cloud which maps the surroundings and is composed of individual points (50-1, 50-2, ..., 50-n), wherein the position of the individual points (50-1, 50-2, 50-3, ..., 50-n) is defined in each case by a point coordinate, and the point cloud characterizes overall the situational spatial surroundings,
- a 2D map is determined on the basis of a static, three-dimensional map, through compression of the data relating to the third plane into a surface, and the data which is determined by the scanner (17, 20, 21, 22, 23, 24) and/or at least one sensor (18, 25) is placed in relationship with the static, two-dimensional map, with the result that a travel path (62) which is provided on the basis of the static map can be compared with the actual situation and it can be checked whether the travel path (62) which is provided corresponds to predefined navigability requirements which are stored in the computer (14),
- the position of the location of the feed mixing vehicle (1) is sensed and defined as a starting point (S) in the computer (14),
- the computer (14) determines a travel path (62) between the starting point (S) and a predefined destination point (Z),
- parameters which are predefined in the computer (14) are compared with the point cloud which maps the surroundings,
- criteria which permit correction of the determined travel path (62) to form a newly calculated travel path (62') are predefined in the computer (14),
with the result that the travel path (62) of the feed mixing vehicle (1) can be checked for its navigability, and in the case of non-navigability being detected said travel path (62) can be adapted autonomously to the requirements of the situational spatial surroundings and can be replaced by an alternative travel path (62').

2. Method for controlling a feed mixing vehicle (1) according to Claim 1, **characterized in that** a static, three-dimensional map of the field of deployment of the feed mixing vehicle (1) is stored in the computer (14), and the data which are determined by the scanner (17, 20, 21, 22, 23, 24) and/or at least one sensor (18, 25) are placed in relationship with the static, three-dimensional map, with the result that a travel path (62) which is provided on the basis of the static map can be compared with the actual situation and it can be checked whether the travel path (62) which is provided corresponds to predefined navigability requests which are stored in the computer (14).

3. Method for controlling a feed mixing vehicle (1) according to one of Claims 1 and 2, **characterized in that** in the case of non-navigability of the provided travel path (62) an alternative travel path (62') for reaching the provided destination point (Z) is determined autonomously by means of the computer (14) on the basis of the stored two-dimensional or three-dimensional map and is used to approach the destination point (Z).

4. Method for controlling a feed mixing vehicle (1) according to one of Claims 1 to 3, **characterized in that** the checking of the navigability of the travel path (62) is carried out continuously.

5. Method for controlling a feed mixing vehicle (1) according to one of Claims 1 to 4, **characterized in that** a 2D laser scanner is provided as the scanner (17, 20, 21, 22, 23, 24), which 2D laser scanner is rotated about a yaw angle, with the result that the rotational movement of the scanner (17, 20, 21, 22, 23, 24) makes it possible to determine two-dimensional data in different planes and to derive data of a point cloud which maps the surrounding space in a three-dimensional fashion from the two-dimensional data of the different planes.

6. Method for controlling a feed mixing vehicle (1) according to one of Claims 1 to 5, **characterized in that** position information on static objects and/or dynamic objects and/or variable objects are stored in different two-dimensional or three-dimensional data spaces in the computer (14).

7. Method for controlling a feed mixing vehicle (1) according to one of Claims 1 to 6, **characterized in that**
- the individual points (50-1, 50-2, ..., 50-n) are compared with objects and/or parameter sets of these objects stored in the computer (14), such as for example, a side wall (28), ground (42), different feedstuffs (51, 52), the sky, obstacle (52) and are classified on this basis;
- the individual points (50-1, 50-2, ..., 50-n) and/or the objects which are identified on the basis of the individual points are included in the determination of the travel path (62, 62') by the computer (14).

8. Method for controlling a feed mixing vehicle according to one of Claims 1 to 7, **characterized in that**
- the feed mixing vehicle (1) comprises an extraction device (10),
- different extraction strategies for controlling the receptacle device (10) are stored in the computer (14) for receiving different feedstuffs;
- the structure of the feedstuff in the region of the extraction starting point (40) is determined by means of at least one scanner (17, 20, 21, 22, 23, 24) and/or sensor (18, 25) and compared with structures and/or parameter sets of feedstuffs which are stored in the computer (14);
- an extraction strategy is assigned to the identified structure in the region of the extraction starting point (40) on the basis of predefined criteria, and
- the computer (14) actuates the receptacle device (10) with the assigned extraction strategy.

9. Method for controlling a feed mixing vehicle according to one of Claims 1 to 8, **characterized in that** criteria on whose satisfaction the operation of the feed mixing vehicle is stopped by means of an emergency off device are predefined computer-internally.

10. Feed mixing vehicle (1) comprising:
- an autonomously movable and controllable chassis (2);
- working elements in the form of a drive engine (12), a traction drive, a mixing container (3), a discharge device for feedstuffs, a weighing device for the quantity of feed which is to be received and a steering system for the chassis (2);
- at least one scanner (17, 20, 21, 22, 23, 24) and/or at least one sensor (18, 25) for transmitting data;
- at least one computer (14) which interacts with the scanners and/or sensors,
**characterized in that** the computer (14) is set up to execute the method according to one of Claims 1 to 9.

## Revendications

1. Procédé pour commander une mélangeuse de fourrage (1) d'un point de départ (S) à un point de destination (Z), la mélangeuse de fourrage (1) comprenant les composants suivantes :
- un châssis (2) qui peut se déplacer et être commandé de manière autonome ;
- des organes de travail sous la forme d'un moteur de propulsion (12), d'un mécanisme de propulsion, d'un récipient de mélange (3), d'un dispositif d'épandage pour le fourrage, d'un dispositif de pesage pour la quantité de fourrage à ramasser et d'un système de direction pour le châssis (2) ;
- au moins un dispositif de balayage (17, 20, 21, 22, 23, 24) et/ou au moins un capteur (18, 25) pour la détermination de données ;
- au moins un ordinateur (14) qui coopère avec les dispositifs de balayage et/ou les capteurs,
- le dispositif de balayage (17, 20, 21, 22, 23, 24) et/ou l'au moins un capteur (18, 25) collectant des données d'environnement,
**caractérisé en ce que**
- l'ordinateur (14) détermine, à partir des données d'environnement collectées, un nuage de points tridimensionnel représentant l'environnement et constitué de points individuels (50-1, 50-2, ..., 50-n), la position des points individuels (50-1, 50-2, 50-3, ..., 50-n) étant respectivement définie par une coordonnée de point et le nuage de points caractérisant dans son ensemble l'environnement spatial situationnel,
- une carte 2D est déterminée en se basant sur une carte statique tridimensionnelle par compression des données concernant le troisième plan en une surface et en mettant les données déterminées par le dispositif de balayage (17, 20, 21, 22, 23, 24) et/ou l'au moins un capteur (18, 25) en référence à la carte statique bidimensionnelle, de sorte qu'un trajet (62) prévu en s'appuyant sur la carte statique peut être accordé avec la situation réelle et qu'il est possible de vérifier si le trajet (62) prévu correspond à des exigences d'accessibilité aux véhicules prédéfinies et enregistrées dans l'ordinateur (14),
- la position locale de la mélangeuse de fourrage (1) est détectée et définie comme point de départ (S) dans l'ordinateur (14),
- l'ordinateur (14) détermine un trajet (62) entre le point de départ (S) et un point de destination (Z) prédéfini,
- les paramètres prédéfinis dans l'ordinateur (14) sont accordés avec le nuage de points qui représente l'environnement,
- des critères sont prédéfinis dans l'ordinateur (14), lesquels permettent une correction du trajet (62) déterminé en un trajet nouvellement calculé (62'),
de sorte que le trajet (62) de la mélangeuse de fourrage (1) peut être soumis à un contrôle d'accessibilité aux véhicules et, dans le cas d'une inaccessibilité aux véhicules constatée, il peut être adapté de manière autonome aux exigences de l'environnement spatial situationnel et peut être remplacé par un trajet alternatif (62').

2. Procédé pour commander une mélangeuse de fourrage (1) selon la revendication 1, **caractérisé en ce qu'**une carte statique tridimensionnelle de la zone d'utilisation de la mélangeuse de fourrage (1) est stockée dans l'ordinateur (14) et les données déterminées par le dispositif de balayage (17, 20, 21, 22, 23, 24) et/ou l'au moins un capteur (18, 25) sont mises en référence à la carte statique tridimensionnelle, de sorte qu'un trajet (62) prévu en s'appuyant sur la carte statique peut être accordé avec la situation réelle et qu'il est possible de vérifier si le trajet (62) prévu correspond à des exigences d'accessibilité aux véhicules prédéfinies et enregistrées dans l'ordinateur (14).

3. Procédé pour commander une mélangeuse de fourrage (1) selon la revendication 1 ou 2, **caractérisé en ce que** dans le cas d'une inaccessibilité aux véhicules du trajet (62) prévu un trajet alternatif (62') permettant d'atteindre le point de destination (Z) prévu est déterminé de manière autonome au moyen de l'ordinateur (14) en se basant sur la carte bi- ou tridimensionnelle stockée, puis utilisé pour la commande du point de destination (Z).

4. Procédé pour commander une mélangeuse de fourrage (1) selon l'une des revendications 1 à 3, **caractérisé en ce que** le contrôle de l'accessibilité aux véhicules du trajet (62) est effectué en continu.

5. Procédé pour commander une mélangeuse de fourrage (1) selon l'une des revendications 1 à 4, **caractérisé en ce que** le dispositif de balayage (17, 20, 21, 22, 23, 24) prévu est un dispositif de balayage à laser 2D qui est mis en rotation autour d'un angle de lacet de sorte que le mouvement de rotation du dispositif de balayage (17, 20, 21, 22, 23, 24) permet de déterminer des données bidimensionnelles dans différents plans et les donnés d'un nuage de points qui représente l'espace environnant en trois dimensions peuvent être dérivées des données bidimensionnelles des différents plans.

6. Procédé pour commander une mélangeuse de fourrage (1) selon l'une des revendications 1 à 5, **caractérisé en ce que** des informations de position d'objets statiques et/ou d'objets dynamiques et/ou d'objets variables dans différents espaces de données bi- ou tridimensionnels sont stockées dans l'ordinateur (14).

7. Procédé pour commander une mélangeuse de fourrage (1) selon l'une des revendications 1 à 6, **caractérisé en ce que**
- les points individuels (50-1, 50-2, ..., 50-n) sont comparés aux objets stockés dans l'ordinateur (14) et/ou des jeux de paramètres de ces objets, comme par exemple une paroi latérale (28), le sol (42), différents fourrages (51, 52), le ciel, un obstacle (52) et sont classifiés en s'appuyant là-dessus ;
- les points individuels (50-1, 50-2, ..., 50-n) et/ou les objets identifiés en s'appuyant sur les points individuels sont utilisés par l'ordinateur (14) dans la détermination du trajet (62, 62').

8. Procédé pour commander une mélangeuse de fourrage (1) selon l'une des revendications 1 à 7, **caractérisé en ce que**
- la mélangeuse de fourrage (1) comprend un dispositif de prélèvement (10) ;
- différentes stratégies de prélèvement destinées à la commande du dispositif de ramassage (10) sont enregistrées dans l'ordinateur (14) pour le ramassage des différents fourrages ;
- la structure du fourrage dans la zone du point de départ du prélèvement (40) est déterminée au moyen d'au moins un dispositif de balayage (17, 20, 21, 22, 23, 24) et/ou capteur (18, 25), puis comparée avec les structures et/ou jeux de paramètres de fourrages enregistrés dans l'ordinateur (14) ;
- la structure identifiée dans la zone du point de départ du prélèvement (40) est associée à une stratégie de prélèvement en se basant sur des critères prédéfinis ;
- l'ordinateur (14) commande le dispositif de ramassage (10) avec la stratégie de prélèvement associée.

9. Procédé pour commander une mélangeuse de fourrage selon l'une des revendications 1 à 8, **caractérisé en ce que** des critères internes à l'ordinateur sont prédéfinis, qui, lorsqu'ils sont remplis, provoquent un arrêt de la mélangeuse de fourrage au moyen d'un dispositif d'arrêt d'urgence.

10. Mélangeuse de fourrage (1) comprenant :
- un châssis (2) qui peut se déplacer et être commandé de manière autonome ;
- des organes de travail sous la forme d'un moteur de propulsion (12), d'un mécanisme de propulsion, d'un récipient de mélange (3), d'un dispositif d'épandage pour le fourrage, d'un dispositif de pesage pour la quantité de fourrage à ramasser et d'un système de direction pour le châssis (2) ;
- au moins un dispositif de balayage (17, 20, 21, 22, 23, 24) et/ou au moins un capteur (18, 25) pour la détermination de données ;
- au moins un ordinateur (14) qui coopère avec les dispositifs de balayage et/ou les capteurs,
**caractérisée en ce que** l'ordinateur (14) est conçu pour mettre en oeuvre le procédé selon l'une des revendications 1 à 9.
